# EUROPEAN PATENT APPLICATION

(11) **EP 3 309 074 A1**
(43) Date of publication of application: **18.04.2018**
(21) Application number: 17195810.1
(22) Date of filing: 10.10.2017
(51) Int. Cl.: B64D 17/72

(54) **PARACHUTE DEVICE**

(30) Priority: 14.10.2016 IT 201600103675
(71) Applicant: Ravennadron di Andrea Antonioli, 48122 Ravenna (IT)
(72) Inventor: ANTONIOLI, Andrea, 48122 Ravenna (IT)
(74) Representative: Roncuzzi, Davide

(57) **Abstract**

Parachute device (100), especially for remotely controlled aircraft (200) such as drones or the like, wherein a canopy (160) can be alternatively switched between a closing condition and an opening condition, wherein, when the canopy (160) is in opening condition, the device allows the aircraft (200) to fall in a controlled way, the device comprising a support and switching structure (150) for the canopy (160), the support and switching structure (150) being switchable between an idle condition and an operating condition - also called use condition-, wherein the switching of the support and switching structure (150) between the idle condition and the use condition results in the switching of the canopy (160) between the opening condition and the closing condition respectively; wherein the support and switching structure (150) can be alternatively inflated and deflated, and the inflating and deflating of the support and switching structure (150) result in the switching of the support and switching structure (150) into the use condition and the idle condition respectively and, thus, into the switching of the canopy (160) into the opening condition and the closing condition respectively.

## Description

The present invention relates to the field of safety devices. In particular, the present invention relates to a parachute device for making a falling body fall slowly and safely. In more detail, the present invention relates to a parachute device for making an aircraft, especially a remotely controlled aircraft such as a drone or the like, fall slowly and safely.

### PRIOR ART

Aerial vehicles "with no human pilot" are well known and widely used; these vehicles, also called "drones", are subdivided into two types: RPA-Remote Piloted Aircraft and UAV-Unmanned Aerial Vehicle; the RPAs are remotely controlled (for instance radio-controlled), while the UAVs operates according to a program previously uploaded in the control unit thereof.

The drones of both types are used not only for military purposes, as in the past years, but also, and increasingly often, for civil purposes. In particular, as regards the civil uses, the new generation drones are successfully used for aerial survey, aerial telemetry, aerophotogrammetry and mapping, and, in general for taking pictures and videos.

In particular, thanks to the last technological developments the autonomy and the range of drones have been increased, and the remote control thereof has become increasingly simple, reliable and accurate; therefore, in the future many other applications will be possible. Drones have been used, for example, for delivery of goods, not only for humanitarian purposes, as in the past years, but also for commercial purposes.

However, the sophistication degree of the last generation drones, as well as of the equipment installed on them (for example highly sophisticated cameras), has resulted in a significant increase in the costs of both drones and equipment.

There is therefore the increasing need for ensuring the integrity of both the drones and the equipment installed on them, even in case of failures or incidents, in particular in the case of out-of-control flight or free fall. There is also the need for ensuring the health and safety of people that stand on the ground within the projection of the flying drones. To this end, solutions were proposed aiming at allowing a controlled falling of the drones - even if not a controlled landing thereof - in case of failure or in case of fuel or battery exhaustion.

Parachute devices are known that are actuated, in case of failure, in order to allow a controlled fall of the drone, and therefore allowing the drone to touch the ground at reduced speed, so as to allow the safe recovery of both the drone and the equipment.

However, the prior art parachute devices, even if appreciable from many viewpoints, have some drawbacks and/or disadvantages.

A first drawback of the prior art parachute devices is, for example, although without limitation, the bulk of the devices when they are in closing condition (i.e. Not used), wherein and excessive bulk of the parachute hinders the flight abilities of the drone and is therefore not compatible with most the applications for which the drone should be used. A second drawback relates to the complexity of the parachute opening devices, that, first of all, results in high costs but that also makes the opening devices, and therefore the parachute, unreliable.

A further inconvenience is the fact that the known parachutes, when open, represent a hinder to the flight, wherein the drone, even if it is possible to recover the functionalities thereof, shall be made land and therefore collected in a landing place that is often poorly accessible or inaccessible.

Lastly, a further disadvantage of the known parachutes is that they are often too delicate and subject to breakages during falling, as they shall be done in very light materials (in order not to be an excessive weight for the drone); therefore, a controlled fall is not possible, and the drone often touches the ground with too great force, being therefore seriously or even irredeemably damaged.

### DESCRIPTION OF THE PRESENT INVENTION

An object of the present invention is to provide a safety device, in particular a parachute device, allowing to overcome or at least minimize the problems of the prior art safety devices and/or parachutes described above.

In particular, an object of the present invention is to provide a parachute device, for example, although without limitation, for unmanned or remotely controlled aircraft such as drones or the like, that has reduced bulk, can be produced simply and, therefore, at low costs, that can be switched (opened) in a simple and therefore reliable way, that, when opened, does not hinder the flight, and that has no risk of failure, malfunction and/or breakage.

Lastly, a further object of the invention is to provide a device of the above mentioned type that can be dimensioned according to the specific applications and can be therefore used for any type of falling objects (people and things) and can be also installed on aircraft of any type and dimension without the need for drastic changes to the aircraft features. In view of the objects described above, the present invention is based on the general concept according to which the inconveniences and/or problems of the known safety devices (especially parachutes) can be overcome or at least effectively limited by providing a switching system (for switching the parachute from a closing condition to an opening condition) providing for inflation, by means of pressurized gas, of a support and switching structure of the parachute canopy; in fact, in this way the parachute is switched by using, for managing the gas flow, very reliable, tested and safe means, such as electrovalves or the like. Moreover, the pressurized gas allows to give the canopy support structure rigidity and stability, avoiding, at the same time, the use of bulky and heavy structures. Lastly, a canopy support and switching structure of the inflatable type is perfect to be closed so as to occupy a minimum bulk.

In view of the drawbacks of the prior art devices, and of the objects described above, the present invention provides for a parachute device, especially for remotely controlled aircraft such as drones or the like, the device comprising a canopy that can be alternatively switched between a closing condition and an opening condition, wherein, when the canopy is in opening condition, the device allows the aircraft to fall in a controlled way, the device comprising a support and switching structure for the canopy, the support and switching structure being switchable between an idle condition and an operating condition - also called use condition-, wherein the switching of the support and switching structure between the idle condition and the use condition results in the switching of the canopy between the opening condition and the closing condition respectively; wherein the support and switching structure can be alternatively inflated and deflated, and the inflating and deflating of the support and switching structure result in the switching of the support and switching structure into the use condition and the idle condition respectively and, thus, in the switching of the canopy into the opening condition and the closing condition respectively.

According to an embodiment, the support and switching structure comprises a plurality of flexible tubular elements suitable to be alternatively inflated and deflated, wherein each tubular element is connected in a fluid-dynamic way to a substantially rigid main tubular element, the substantially rigid main tubular element being connected in a fluid-dynamic way to a pressurized gas source.

According to a further embodiment, the canopy further comprises a secondary containment structure that can be switched between an opening condition and a closing condition and is suitable to avoid the accidental switching of the canopy from the closing condition to the opening condition.

According to a further embodiment, the device comprises blocking means for blocking the secondary containment structure in the closing condition.

According to a further embodiment, the blocking means comprise a hollow engagement element, wherein the secondary containment structure comprises a plurality of substantially rigid ribs, wherein first end portions of the substantially rigid ribs are reciprocally connected by means of a common elastic element, and wherein, when the containment structure is in closing condition, the free end portions of the ribs opposite to the common elastic element are housed inside the hollow engagement element.

According to a further embodiment, the main tubular element is housed, at least partially, in the hollow engagement element of the containment structure, wherein the main tubular element is connected in a fluid-dynamic way to the pressurized gas source through the hollow engagement element of the containment structure, and wherein the inflation of pressurized gas into the tubular elements through subsequently the hollow engagement element and the main tubular element results in a translation of the support and switching structure according to a first translation direction, and in the disengagement of the free ends of the ribs from the hollow engagement element. According to a further embodiment, the portion of the main tubular element housed in the hollow engagement element and the hollow engagement element are so shaped and respectively positioned as to define a variable volume chamber containing gas, wherein the gas pressure inside the chamber results in a thrust exerted on this portion of the main tubular element, thanks to which the canopy is kept in closing condition with the free ends of the ribs engaged in the hollow engagement element.

According to a further embodiment, the translation of the main tubular element according the first translation direction results in a compression of the gas contained in the chamber. According to a further embodiment, the hollow engagement element comprises vent means allowing the gas to pass out of the variable volume chamber.

According to a further embodiment, the canopy comprises at least one through aperture and closing and opening means for closing and opening this at least one through aperture. According to a further embodiment, the closing and opening means can be automatically switched into closing position while the parachute device is falling.

A further object of the invention is an aircraft, in particular a remotely controlled aircraft, like a drone or the like, equipped with a parachute device according to any one of the embodiments summarized above.

Any further embodiments of the equipment according to the invention are defined in the claims.

### BRIEF DESCRIPTION OF DRAWINGS

The invention will be better explained in the description below of the embodiments illustrated in the drawing. However, the present invention is not limited to the embodiments described below and illustrated in the drawing; contrariwise, all variants of the embodiments described below and represented in the drawing that are clearly apparent to those skilled in the art fall within the scope of the invention.

As the present invention can be advantageously applied, in particular, to aircraft such as drones or the like, the invention will be explained below with reference to the applications to this type of aerial vehicles; however, the invention is not limited to the field of drones or the like, but it can be obviously applied to other fields, for applications like the controlled and safe fall of falling objects, in particular of people or things.

In the drawing:
- Fig. 1 is a schematic side view of a device according to an embodiment of the invention (applied to an aircraft) in closing condition;
- Fig. 2 is a schematic side view of a device according to an embodiment of the invention (applied to an aircraft) in opening condition;
- Fig. 3 is a schematic view, partially cut-away, of a device according to an embodiment of the invention in closing condition;
- Fig. 4 is a schematic view, partially cut-away, of a detail of a device according to an embodiment of the invention in closing condition;
- Fig. 5 is a schematic view, partially cut-away, of a device according to an embodiment of the invention in opening condition;
- Fig. 6 is a schematic plan view (from the top) of a device according to an embodiment of the invention in opening condition;
- Fig. 7 is a side cut-away view of part of the canopy of a device according to an embodiment of the invention;
- Fig. 8 shows a variant of the device according to the invention;
- Fig. 9 shows a detail of Fig. 8 in enlarged scale and with some parts removed for the sake of clarity;
- Figs. 10a) - 10c) show operative configurations of Fig. 8.

### DETAILED DESCRIPTION OF THE PRESENT INVENTION

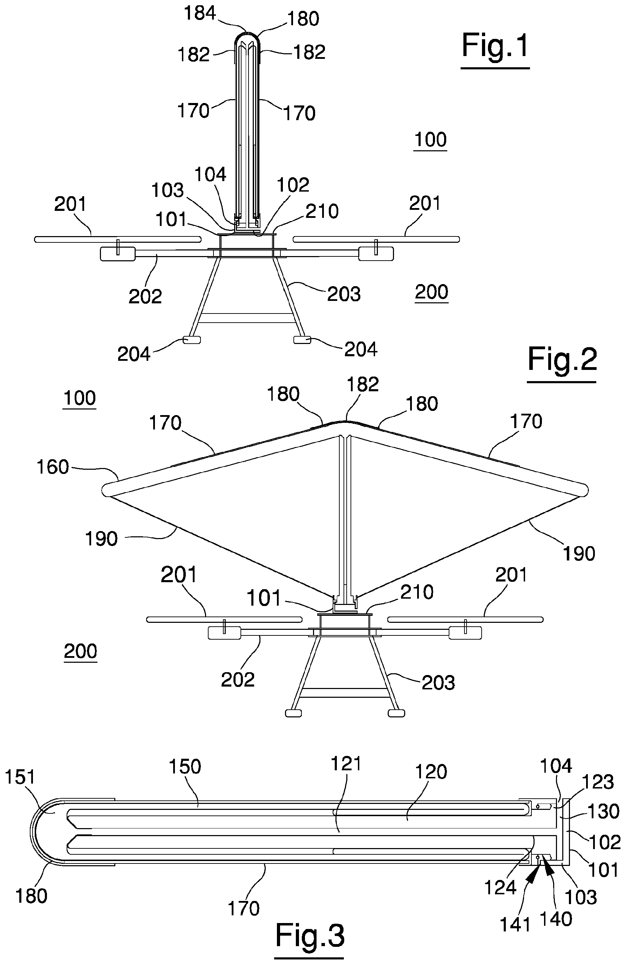

In Figs. 1 and 2, the reference number 100 indicates a parachute device according to an embodiment of the invention, and the reference number 200 indicates a drone/aircraft of the known type (in this specific case, although without limitation, a so-called quadcopter, i.e. A four-rotor helicopter) not described in greater detail for the sake of conciseness; in particular, the parachute device 100 (hereinafter simply "device 100") is shown in closing condition in Fig. 1 and in opening condition in Fig. 2. The drone 200 comprise, in particular, a carriage 203 for the drone to land and rest on the ground through feet 204, a support structure 202 for plurality of rotors 201, namely four rotors in the illustrated example. In the closing configuration of Fig. 1, the parachute device 100 is carried by a flat portion 210 of the drone 200 provided centrally in the support structure 202 and is in condition of minimum bulk. In this configuration, the parachute device 100 does not hinder the flight, as it is closed like an umbrella around a longitudinal extension axis substantially parallel to the rotation axes of the rotors 201 (vertical with respect to the figures). In the opening configuration of Fig. 2, the device 100 is open like an open umbrella, and in this case again it does not hinder the flight of the drone 200, as it is positioned well above the rotors 201. It is clearly apparent from Fig. 2 that the device 100, in the closing configuration shown here, allows the drone 200, for example in case of failure of the same drone, to fall slowly and in a controlled way, and therefore to land touching the ground at reduced speed, so as not to compromise the functionalities of the same drone 200. It should be noted that in the attached figures the rotors 201 are shown substantially coplanar with one another, but this does not limit the protective scope of the invention. What is relevant is that the device 100 is always above the height of the rotor 201 that is farthest from the carriage 203.

Here below, further features and/or components of the parachute device 100 will be described with reference to Figs. 3. 4 and 5; features and/or components shown in these figures and already described above with reference to other figures will be identified by the same reference numbers.

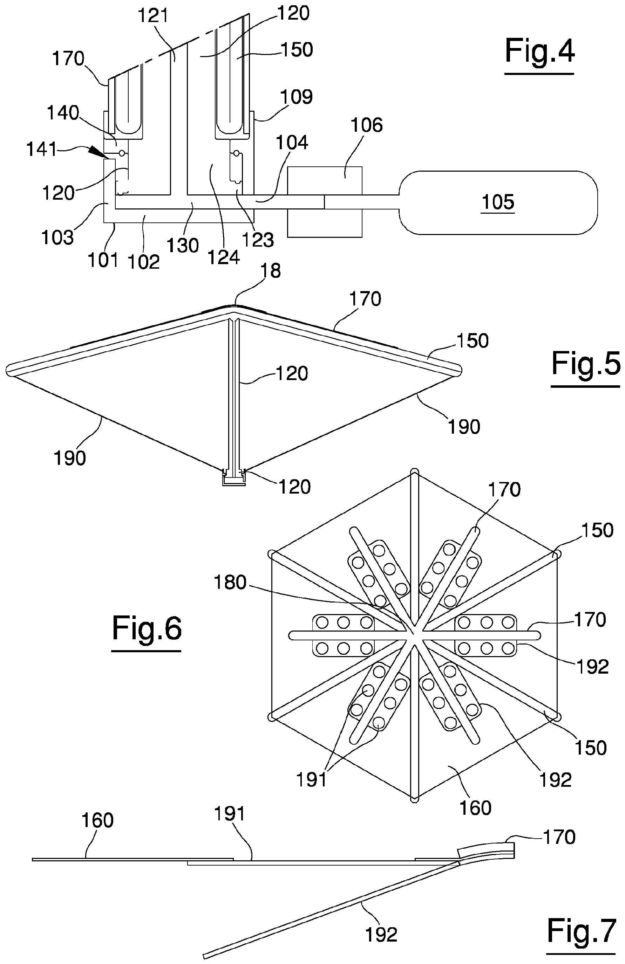

Fig. 4 clearly shows that the device 100 comprises an engagement element or base 101 for engaging a bottom wall 102, from which a hollow and substantially tubular and/or cylindrical portion 103 extends in a direction parallel to the longitudinal extension direction of the device 100. In the substantially cylindrical wall of the hollow portion 103 a first aperture 104 is provided, through which the inside of the engagement base 101 is connected in a fluid-dynamic way to a pressurized gas source 105, wherein means 106 (for instance one or more valves, one or more electrovalves, one or more cocks) are provided between the source 105 (for example a simple tank) and the aperture 104, the means 106 being suitable to be opened and closed alternatively, and therefore being suitable alternatively to allow and to prevent the inflation of gas from the tank 105 into the engagement base 101. The means 106 according to the present invention are of a known type and they will thus not described in greater detail hereinafter for the sake of conciseness. However, it should be specified that, according to the present invention, the opening and closing of the means 106 can be controlled through a control unit (not shown), for example following a failure signal received by the control unit.

The bottom wall may be circular in shape but it may have any other shape, always falling within the protective scope of the invention.

In Figs. 3 to 5, the reference number 120 indicates a main tubular element with an inner cavity 121 connected in a fluid-dynamic way with the inside of the engagement base 101. To this end, the main tubular element comprises an engagement portion 122 housed inside the base 101; in particular, the engagement portion 122 comprises an engagement base or portion 123, whose outer radius substantially coincides with the inner radius of the engagement base 101, and a second portion 124, whose radius is lower than the radius of the portion or base 123. In particular, between the outer cylindrical surface of the portion 123 (substantially disc-shaped) and the inner surface of the hollow portion 103 of the base 101, sealing means can be provided, like a gasket, an o-ring or the like. The disc-shaped portion or base 123 and the engagement base 101 therefore define and delimit a first variable volume chamber 130 (see, to this end, the description below) connected in a fluid-dynamic way to the gas tank 105 and to the cavity 121 of the main tubular element 120.

As it is clearly apparent from Figs. 3 and 4, the portion 124 with lower radius of the engagement portion 122 defines a second chamber, substantially annular in shape, an annular projection 109 being provided to this end, extending from the inner surface of the hollow portion 103 of the base 101, the second chamber 140 being, in particular, connected in a fluid-dynamic way to the outside through a second aperture 141 provided in the cylindrical wall of the hollow portion 103 below the annular projection 109. In the aperture 141 (or in correspondence of this aperture) means may be also provided for closing and opening the same aperture 140, for example a vent valve and/or electrovalve. In fact, a gas, for instance air, is contained in the second chamber 141 for blocking the device in the closing condition, according to what will be described in greater detail below.

The main tubular element 120 can be translated with respect to the engagement base 101, in particular along a direction parallel to the longitudinal extension direction of the device 100 and the base 101, and therefore alternatively from the left to the right and from the right to the left with respect to Fig. 3.

The cavity 121 is connected in a fluid-dynamic way to a plurality of inflatable tubular elements 150 (see Fig. 6), in particular through a common joining element 151.

With reference to Figs. 3, 4 and 6, it should be noted that the device comprises a canopy 160 (practically a cloth) that can be opened and closed substantially like the canopy of a known parachute (and, more in general, like an umbrella); the canopy 160 is fastened on the inflatable tubular elements 150 and a containment structure is fixed on the canopy 160, in particular on the surface of the canopy 160 opposite to the surface that is in contact with the inflatable elements 150, the containment structure being formed by a plurality of substantially rigid or semi-rigid ribs 170. In particular, the end portions of the ribs 170 near the longitudinal symmetry axis of the device are connected at the top by means of an elastic element 180 provided with an appendix 182 for each rib 170 extending radially from a central body 184.

The use of the device 100 in combination with the drone 200 is clearly apparent from the description above and does not require further explanations. However, it should be specified what follows. In the configuration of Figs. 3 and 4 (closing configuration), the pressure exerted by the gas inside the second chamber 141 results in a thrust exerted by the gas on the annular portion 123, wherein the main tubular element 120 is therefore pulled towards the engagement base 101 (entering the tubular and/or cylindrical hollow portion 103 of the base 101). In this configuration, each tubular element 150 is partially folded on itself and the free end of each rib 170 (opposite to the elastic element 180) is kept engaged inside the base 101, in particular inside the annular projection 109 delimiting at the top the substantially tubular portion 103 of the base 101. The gas pressure inside the chamber 140 is such to prevent accidental and/or undesired translations of the main tubular element 120 exiting from the base 101, and therefore to prevent the ribs 170 from being freed from the annular projection 109; Therefore, the device 100 is reliably kept in closing configuration, with the ends of the ribs 170 contained inside the annular projection 109.

If it is necessary to switch the device from the closing configuration of Fig. 3 to the opening configuration of Fig. 5, this is possible by allowing the pressurized gas to flow from the tank 105 into the first chamber 130 through the aperture 104, for instance by controlling the opening of the means 106, according to what described above.

The pressure of the gas entering the chamber 130 results in a thrust onto the element 120 in the direction of exiting from the base 101, and therefore against the resistance exerted by the gas in the chamber 140, with a consequent decrease in the volume of the chamber 140 and increase in the volume of the chamber 130.

Moreover, the translation of the element 120 in the exit direction from the base 101 (from the right to the left with respect to Fig. 3 and from the bottom upwards with respect to Fig. 4), results in the disengagement of the free ends of the ribs 170 from the portion 103 of the base 101, and therefore the disengagement of the whole device.

Moreover, the gas entering the chamber 130 flows into the cavity 121 and, from here, in the tubular element 150 that inflate and open until they are arranged in a spider-like way (like the ribs of an open umbrella), thus drawing the canopy 160 that is therefore opened in the opening configuration of Figs. 5 and 6.

It should be specified that, as shown in particular in Fig. 5, the orientation of the canopy 160, of the tubular elements 150 and of the ribs 170 in opening position is defined by a plurality of stretchers 190 (for example, simple wires), interposed between the free edge of the canopy 160 and the base 101. Lastly, it is clearly apparent that variants and modifications can be done to the device 100 described and illustrated above without however departing from the protective scope of the invention.

For example, with reference to Figs. 6 and 7, the canopy 160 has a plurality of through holes 191 distributed into groups (groups of six holes 191, in the illustrated example), each sector of the canopy 160 having one or more groups of holes 191.

In correspondence of each group of holes 191 a tilting element 192 is also provided, in particular applied (at an end) to the inner surface of the canopy 160. Each tilting element, that can be made of a laminate portion, so as o be poorly deformed, or of fabric, can be switched between the two positions shown in fig. 7, namely a closing position, where it is in contact with the canopy 160 and closes the holes 191, and a opening position, where it is detached from the canopy 160.

The elements 192 are automatically switched, according to the movement direction of the drone 200 and therefore of the device 100. When the aircraft 200 and the device 100 are falling, the elements 192 are pulled towards the canopy 160 by means of the air flow below, exerting resistance to the fall of the device 100 acting with the effect of closing the holes 191. Vice versa, with the aircraft 200 and the parachute flying upwards, for example after recovering the functionalities of the aircraft 200 following a failure, the elements 192 move away from the canopy 160 due to the air flow above that exerts resistance against the upward movement of the device 100 and tends to open the holes 191 again.

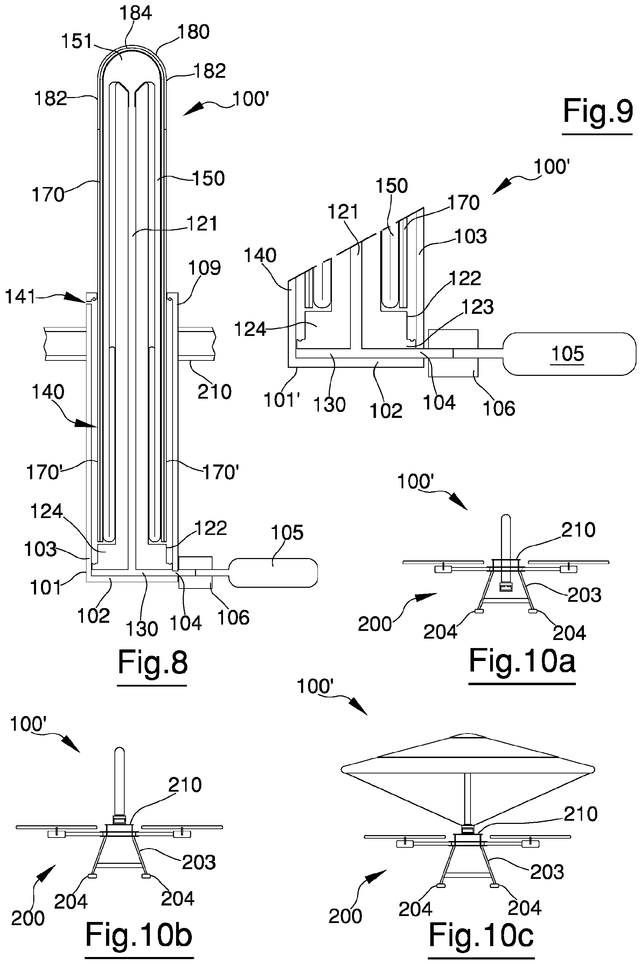

Moreover, the device 100 may be modified as illustrated in Figs. 8, 9, 10a), 10b) and 10c), without however structurally modifying the structure thereof; in these figures, details operating similarly are therefore indicated by the same reference numbers used in the previous figures, for the sake of practicality.

In particular, in Fig. 8 the hollow portion 103 has increased height with respect to what illustrated in Figs. 3 and 4, and the second chamber 140 and, with reference to Figs. 10A) to 10c) extends towards the bottom of the carriage 203, transversally engaging, in a rigid manner, the support structure 202, in particular the flat portion 210 of the drone 200, even if it remains lifted at the bottom with respect to the feet 204 of the carriage 203. The annular projection 109 is therefore always slightly above the flat portion 210 of the drone 200 and the ribs 170, and specifically intermediate portions 170' thereof, substantially arranged on the centre thereof, are contained inside the hollow portion 103 almost completely and, in any case, for a length taking into account the maximal length of the ribs 170, the height of the hollow portion 103 and the height at which the elastic element 180 is arranged with respect to the feet 204 when, in use, the first chamber 130 has the minimum height. In view of what described above, in this case again the device 100 can be opened when the main tubular element 120 has been lifted, by means of the pressure acting in the first chamber 130, up to the point where the ribs 170 are freed from the annular projection 109. From now on, the device 100 can operate as a parachute for the drone 200.

Obviously, the embodiment described above can be also useful in case you want to adjust at will the distance between the canopy 160 of the parachute 100 and the rotors 201 of the drone 200, and therefore also the distance of the base 101 from the carriage 203 of the drone 200. The longitudinal extension of the hollow portion 103 (of the base 101) and, consequently, of the second chamber 104 can be therefore defined according to the specific needs. To this end, it could be useful to connect the base 101 of the device 100 to the flat portion 210 of the drone 200, with respect to the carriage 203, through a device allowing to adjust at will the distance between the base 101 and the feet 204. A device of this type may be done through a threaded connection 215 comprising a hole provided in the flat portion 210 of the drone 200 and a thread provided externally in the outer wall of the hollow portion of the base 101 of the device 100.

The above description has therefore demonstrated that the present invention allows, through the embodiments illustrated in the attached figures, to achieve the objects mentioned at the beginning. In particular, the device according to the invention has reduced bulk, can be produced simply and therefore at low costs, can be switched (opened and closed) in a simple and therefore reliable way, and, when opened, it does not hinder the flight and has no risk of failure, malfunction and/or breakage.

Lastly, the device according to the present invention can be dimensioned according to the specific applications, and can be therefore used for any type of falling objects (people and things) and can be also installed on aircraft of any type and dimension without the need for drastic changes to the aircraft features.

Even if the device according to the invention has been explained in the above detailed description of non-limiting embodiments shown in the drawing, however the present invention is not limited to the embodiments described above and illustrated in the figures. Contrariwise, the scope of the present invention is defined by the appended claims.

## Claims

1. Parachute device (100), especially for remotely controlled aircraft (200) such as drones or the like, said device comprising a canopy (160) that can be alternatively switched between a closing condition and an opening condition, wherein, when said canopy (160) is in opening condition, the device allows said aircraft (200) to fall in a controlled way, said device comprising a support and switching structure (150) for said canopy (160), said support and switching structure (150) being switchable between an idle condition and an operating condition - also called use condition-, wherein the switching of said support and switching structure (150) between said idle condition and said use condition results in the switching of said canopy (160) between said opening and closing conditions respectively; **characterized in that** said support and switching structure (150) can be alternatively inflated and deflated, and **in that** the inflating and deflating of said support and switching structure (150) result in the switching of said support and switching structure (1509 respectively into said use condition and idle condition and, thus, into the switching of said canopy (160) into said opening and closing conditions.

2. Device (100) according to claim 1, **characterized in that** said support and switching structure (150) comprises a plurality of flexible tubular elements (150) suitable to be alternatively inflated and deflated, and **in that** each of said tubular elements (150) is connected in a fluid-dynamic way to a substantially rigid main tubular element (120), said substantially rigid main tubular element (120) being connected in a fluid-dynamic way to a pressurized gas source (105).

3. Device according to claim 2, **characterized in that** said device (100) furthermore comprises a secondary containment structure (170), also this structure being switchable between an opening condition and a closing condition, said secondary containment structure (170) being suitable to avoid the accidental switching of said canopy (160) from the closing condition to the opening condition.

4. Device according to claim 3, **characterized in that** said device (100) comprises blocking means (101) for blocking said secondary containment structure (170) in said closing condition.

5. Device according to claim 4, **characterized in that** said blocking means (101) comprise a hollow engagement element (101), **in that** said secondary containment structure (170) comprises a plurality of ribs (170), **in that** first end portions of said ribs (170) are reciprocally connected by means of a common elastic element (180), and **in that**, when said containment structure is in said closing condition, the free end portions of said ribs (170) opposite to said common elastic element (180) are housed inside said hollow engagement element (101) .

6. Device (100) according to claim 5, **characterized in that** said main tubular element (120) is housed at least partially in said hollow engagement element (101) of said blocking means, **in that** said main tubular element (120) is connected in a fluid-dynamic way to said pressurized gas source (105) through said hollow engagement element (101) of said blocking means, and **in that** the inflation of pressurized gas into said tubular elements (150) through subsequently said hollow engagement element (101) and said main tubular element (120) results in a translation of said support and switching structure (170) according to a first translation direction, and in the disengagement of said free ends of said ribs (170) from said hollow engagement element (101).

7. Device according to claim 6, **characterized in that** the portion (122, 123) of said main tubular element (120) housed in said hollow engagement element (101) and said hollow engagement element (101) are so shaped and respectively positioned as to define a variable volume chamber (140) containing gas, and **in that** the gas pressure inside said chamber (140) results in a thrust exerted on said portion (123) of the main tubular element (120), thanks to which said canopy (160) is kept in said closing condition with the free ends of said ribs (170) engaged in said hollow engagement element (101) .

8. Device according to claim 7, **characterized in that** the translation of said main tubular element (120) according to said first translation direction results in a compression of the gas contained in said chamber (140).

9. Device according to claim 7, **characterized in that** said hollow engagement element (101) comprises vent means allowing gas to pass out of said variable volume chamber (140).

10. Device according to any one of claims 1-9, **characterized in that** said canopy (160) comprises at least one through hole (191) and closing and opening means (192) for closing and opening said at least one through hole (191).

11. Device according to claim 10, **characterized in that** said closing and opening means (192) can be automatically switched to closing position during the fall of said parachute device (100).

12. Device according to any one of the previous claims, **characterized in that** said hollow engagement element (101) contains an intermediate longitudinal portion (170') of said ribs (170).

13. Remotely controlled aircraft (200) such as a drone or the like, **characterized in that** said aircraft (200) has a support structure (202) carrying a plurality of propellers (201) and is equipped with a parachute device (100) according to any one of claims 1-12.

14. Aircraft according to claim 13, **characterized in that** said parachute device (100) has a respective hollow engagement element (101) carried by said support structure (202) by means of an adjusting device (215) suitable to adjust at will the distance of said hollow engagement element (101) from said propellers (201).
